# EUROPÄISCHE PATENTSCHRIFT

(11) **EP 1 486 681 B1**
(45) Veröffentlichungstag und Bekanntmachung des Hinweises auf die Patenterteilung: **23.08.2006**
(21) Anmeldenummer: 04004041.2
(22) Anmeldetag: 23.02.2004
(51) Int. Cl.: F15B 20/00, F15B 13/044, F16K 31/06, B66C 13/12, B66C 15/00

(54) **Elektrohydraulische Steuervorrichtung und Hebezeug**
Electro-hydraulic control device and lifting apparatus
Dispositif de commande électrohydraulique et appareil de levage

(30) Priorität: 13.06.2003 DE 20309190 U
(43) Veröffentlichungstag der Anmeldung: 15.12.2004
(73) Patentinhaber: HAWE Hydraulik GmbH & Co. KG, 81673 München (DE)
(72) Erfinder: Röhm, Volker, 72800 Eningen (DE)
(74) Vertreter: Grünecker, Kinkeldey, Stockmair & Schwanhäusser Anwaltssozietät

(56) Entgegenhaltungen:
- EP-A- 0 342 461
- DE-A- 3 038 338
- DE-A- 3 310 866
- US-A- 3 128 677
- US-B1- 6 398 182

## Beschreibung

Die Erfindung betrifft eine elektrohydraulische Steuervorrichtung der im Oberbegriff des Anspruchs 1 angegebenen Art, sowie ein Hebezeug der im Oberbegriff des Anspruchs 7 angegebenen Art. Den nächstliegenden Stand der Technik stellt die US-B1 6 398 182 dar.

Bei Hebezeugen ist es üblich, die Steuerventile für verschiedene Hydromotoren an einer vom Boden und/oder in einer Kabine zugänglichen Stelle zusammenzufassen und mit den Hydromotoren über Hydraulikleitungen zu verbinden. Im einfachsten Fall werden die Steuerventile mit Stellhebeln manuell betätigt. Dieses Prinzip ist relativ störungssicher. Falls beispielsweise ein Steuerventil zum Klemmen neigen sollte, wird mehr Kraft ausgeübt, um das Steuerventil korrekt zu verstellen.

Weiterhin ist es bekannt, in Hebezeugen Magnetsteuerventile zu verwenden, die beispielsweise über eine Art Joystick oder dgl. elektrisch angesteuert werden. Solche Magnetsteuerventile verfügen häufig über eine manuelle Notfallbetätigung, wie einen Handhebel oder dgl., um im Falle eines Stromausfalls oder eines zum Verklemmen neigenden Steuerventils manuell einzugreifen. Dies ist aber nur möglich, wenn die Magnetsteuerventile vom Boden und/oder in der Kabine zugänglich sind.

In jüngster Zeit wird in Hebezeugen, wie sogenannten Betonpumpen oder Mobilkränen, einer Elektroniksteuerung integriert, z.B. ein CAN-Bussystem, an das neben den Magnetsteuerventilen auch verschiedene Sensoren angeschlossen sind. In solchen Fällen gibt es bauliche oder funktionelle Gründe, die Magnetsteuerventile direkt an den Hydromotoren oder zumindest in deren Nähe zu platzieren. Beispielsweise lassen sich dadurch extrem lange und verletzungsgefährdete Hydraulikleitungen vermeiden, und wird auch eine wegen der Länge fedemde Hydrauliksäule zwischen dem jeweiligen Magnetsteuerventil und dem Hydromotor vermieden. Die Magnetsteuerventile sind nur mehr elektrisch oder über die Elektroniksteuerung mit vom Boden und/oder in der Kabine zugänglichen Betätigungselementen verbunden. Speziell die am Masten oder am Ausleger in exponierten Positionen angeordneten Magnetsteuerventilen sind dann vom Boden und/oder der Kabine aus nicht mehr zugänglich. Die Praxis zeigt jedoch, dass die Elektroniksteuerung oder die elektrische Verbindung ausfallen oder gestört sein kann, bzw. Magnetsteuerventile hängenbleiben oder die Arbeitsspule durchbrennen kann. Dann lassen sich die exponiert positionierten Magnetsteuerventile nicht mehr verstellen und kann wegen der exponierten Lage, z.B. oben am Masten, nicht mehr eingegriffen werden. Dies kann zu kritischen Situationen führen.

Es wäre zwar denkbar, ähnlich wie bei dem Schaufelbagger gemäß US 3 128 677 Bowdenzug-Verbindungen zu exponierten Magnetsteuerventilen am Ausleger zu verlegen, um in einem Notfall (Stromausfall oder Hängenbleiben eines Steuerventils) vom Boden und/oder der Kabine aus manuell einzugreifen. Dies wäre jedoch bei mehreren Steuerventilen jedoch ein unvertretbar hoher Aufwand und bedingte auch eine erhebliche Modifizierung der Steuerventile.

Der Erfindung liegt die Aufgabe zugrunde, eine elektrohydraulische Steuervorrichtung sowie ein Hebezeug anzugeben, bei denen trotz exponierter Positionierung des jeweiligen Magnetsteuerventils in einem Notfall vom Boden und/oder der Kabine eingegriffen und der Hydromotor verstellt werden kann.

Die gestellte Aufgabe wird mit den Merkmalen des Anspruchs 1 und des nebengeordneten Anspruchs 7 gelöst.

In einem Notfall lässt sich das Magnetsteuerventil mittels der Notfallspule elektrisch verstellen, selbst wenn die Stromversorgung der Arbeitsspule ausgefallen oder die Arbeitsspule durchgebrannt ist, oder die mit der Arbeitsspule erzeugbare Kraft zur Verstellung des Magnetsteuerventils wegen Hängenbleibens des Magnetsteuerventils nicht mehr ausreichen sollte. Sollte nämlich der Anker aus irgendeinem Grund hängen geblieben sein, oder ein Ventilelement des Steuerventils, so dass die mit der Arbeitsspule aufzubringende Magnetkraft zur Verstellung nicht mehr ausreicht, dann erzeugt die Notfallspule eine zusätzliche Kraft, mit der die Wahrscheinlichkeit sehr hoch ist, dass sich das Magnetsteuerventil dann dennoch wie gewünscht verstellen lässt. In einem Notfall braucht die Verstellung des Steuerventils nicht auf dieselbe Weise wie mit der Arbeitsspule, z.B. proportional oder lastdruckabhängig oder dgl., vorgenommen zu werden, weil es nur darauf ankommt, den Hydromotor irgendwie zu verstellen, um eine kritische Situation zu vermeiden oder zu beseitigen. Im Idealfall kann die Notfallspule jedoch so ausgelegt werden, dass sie das Steuerventil genauso betätigt wie dies die Arbeitsspule kann. In manchen Fällen reicht es aus, die Notfallspule an dieselbe Stromquelle anzuschließen wie die Arbeitsspule, um nur eine Störung in der Stromübertragung zur Arbeitsspule zu umgehen. Zweckmäßig verfügt die Notfallspule jedoch über eine eigene Stromquelle, z.B. eine Batterie, um im Notfall vollständig unabhängig von der Stromversorgung der Arbeitsspule zu sein. Baulich einfach wird die Notfallspule außen um die Arbeitsspule positioniert oder in Verlängerung der Arbeitsspule. Dies lässt sich beispielsweise einfach bewerkstelligen mit einer Doppelwicklung des Betätigungsmagneten, und getrennten Stromanschlüssen.

Zweckmäßig wirken die Arbeitsspule und die Notfallspule auf einen gemeinsamen Anker ein.

Alternativ kann für die Notfallspule ein Hilfsanker vorgesehen sein, der dann entweder auf den Anker der Arbeitsspule einwirkt oder das Steuerventil bzw. ein Ventilelement des Steuerventils direkt beaufschlagt. Gegebenenfalls ist der Hilfsanker eine direkte Verlängerung des Ankers der Arbeitsspule.

Da ein solcher Notfall ohnedies meist eine Wartung oder Reparatur erfordert, und erfahrungsgemäß selten auftritt, reichte es aus, wenn die Notfallspule mit dem Anker bzw. dem Hilfsanker als Schwarz/Weiß-Magnet ausgebildet ist. Diese Lösung ist kostengünstig und reicht für den Notfall aus. Damit ist gemeint, dass die Arbeitsspule mit dem Anker gegebenenfalls als Proportionalmagnet ausgebildet sein kann, was für die Notfallspule mit dem Anker nicht unbedingt erforderlich ist.

Zweckmäßig ist die Notfallspule über eine eigene Verkabelung mit einem vom Boden und/oder in der Kabine zugänglichen Schalter, z.B. einem entsprechend gekennzeichneten Taster, an die Stromquelle angeschlossen, vorzugsweise eine eigene Stromquelle. Dann lässt sich das Steuerventil problemlos verstellen, selbst wenn die Elektroniksteuerung oder andere elektrische Komponenten ausgefallen sein sollten.

Bei einer zweckmäßigen Ausführungsform ist die Arbeitsspule an eine Elektroniksteuerung angeschlossen, vorzugsweise an einen CAN-Knoten eines CAN-Bussystems. Die Verkabelung zur Notfallspule ist vom CAN-Bussystem getrennt und lässt die Verstellung des Steuerventils selbst dann zu, wenn unfallbedingt das CAN-Bussystem unterbrochen ist oder aus anderem Grund funktionsunfähig geworden sein sollte.

Ein wesentlicher Vorteil der erfindungsgemäßen Lösung liegt darin, dass das mit der Notfallspule modifizierte Magnetsteuerventil kostengünstig und kompakt ist, und dass sich die Verkabelung zur jeweiligen Notfallspule auch bei sehr exponiert angeordnetem Magnetsteuerventil bequem installieren lässt. Dieses Konzept kann auch zweckmäßig sein, wenn die Arbeitsspule drahtlos mittels einer Sender/Empfänger-Kombination angesteuert wird. Dabei ist es sogar denkbar, auch die Notfallspule drahtlos über eine Sender/Empfänger-Kombination anzusteuern, gegebenenfalls dann auf einer anderen Frequenz und mit einer eigenen Stromquelle.

Eine elektrohydraulische Steuervorrichtung zur Maststeuerung an einer Betonpumpe oder einem Mobilkran der hier interessierenden Art wird in der älteren DE 202 15 838 U für einen Knickzylinder eines Masten offenbart. Die gesamte Offenbarung dieses deutschen Gebrauchsmusters wird hiermit durch Rückbeziehung inkorporiert.

Anhand der Zeichnungen werden Ausführungsformen des Erfindungsgegenstandes erläutert. Es zeigen:
- Fig. 1: ein schematisches Blockdiagramm einer elektrohydraulischen Steuervorrichtung an einem Hebezeug, von dem nur Teile dargestellt sind,
- Fig. 2: einen schematischen Schnitt eines Teils eines Magnetsteuerventils einer ersten Ausführungsform, und
- Fig. 3: einen schematischen Schnitt eines Teils eines Magnetsteuerventils einer zweiten Ausführungsform.

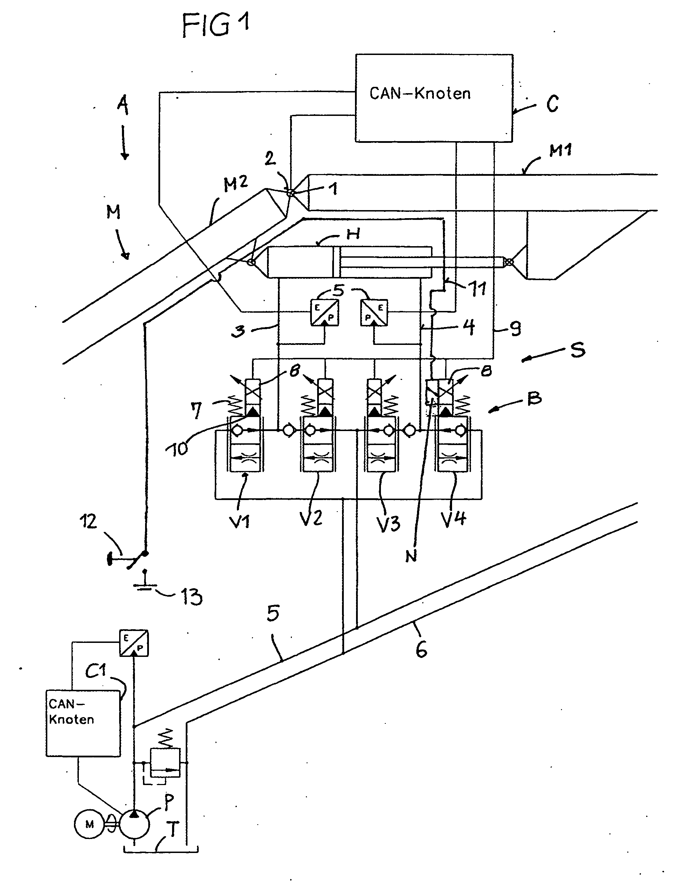

Zwischen zwei Sektionen M1, M2 eines Masten oder Auslegers M eines Hebezeugs A in Fig. 1 ist ein Hydromotor H eingesetzt, beispielsweise um die Sektion M1 im Winkel relativ zur Sektion M2 in einem Gelenk 1 zu verstellen. Dem Hydromotor H, z.B. einem doppelt wirkenden Hydraulikzylinder, ist eine elektrohydraulische Steuervorrichtung S zugeordnet, die am Masten M, bzw. direkt am Hydromotor H, angeordnet und deshalb von der nicht gezeigten Kabine oder vom Boden aus nicht zugänglich ist. Bei der in Fig. 1 gezeigten elektrohydraulischen Steuervorrichtung S handelt es sich um eine computerisierte Steuervorrichtung, die in ein CAN-Bussystem eingegliedert ist, von dem zwei CAN-Knoten C, C1 gezeigt sind, die über einen nicht dargestellten CAN-Bus kommunizieren.

Zum Verstellen des Hydromotors H ist eine Baugruppe B aus z. B. vier Magnetsteuerventilen V1 bis V4 vorgesehen und an eine Pumpenleitung 5 einer Pumpe P und eine Rücklaufleitung 6 zu einem Tank T angeschlossen. Von der Baugruppe B führen zwei Arbeitsleitungen 3, 4 zum Hydromotor H.

Das Magnetsteuerventil V2 dient dazu, den kolbenseitigen Raum des Hydromotors H über die Arbeitsleitung 3 mit der Pumpenleitung zu verbinden. Das Magnetsteuerventil V1 dient dazu, den kolbenseitigen Raum des Hydromotors H über die Arbeitsleitung 3 mit der Rücklaufleitung 6 zu verbinden. Das Magnetsteuerventil V3 dient dazu, den kolbenstangenseitigen Raum des Hydromotors H über die Arbeitsleitung 4 mit der Pumpenleitung 5 zu verbinden. Das Magnetsteuerventil V4 dient dazu, den kolbenstangenseitigen Raum des Hydromotors H über die Arbeitsleitung 4 mit der Rücklaufleitung 6 zu verbinden.

Bei der gezeigten Ausführungsform ist jedes Magnetsteuerventil V1 bis V4 ein 2/2-Proportional-Druckregelventil in Sitzventilbauweise, jeweils mit einem Betätigungsmagneten 8, z.B. einem Proportionalmagneten, der über eine elektrische Steuerleitung 9 mit dem CAN-Knoten C verbunden ist. Jedes Magnetsteuerventil V1 bis V4 wird durch eine Ventilfeder 7 in die gezeigte Absperrstellung (leckagefrei dicht) beaufschlagt und durch den Betätigungsmagneten 8 abhängig vom Wert des Beaufschlagungsstroms gegen die Feder 7 in eine Druckregelstellung verstellt. Durch die schwarzen Dreiecke 10 wird impliziert, dass es sich bei den Magnetsteuerventilen V1 bis V4 um Proportionaldruckregelventile mit hydraulischer Vorsteuerung handelt. Anstelle der hier gezeigten Proportional-Druckregelventile als die Magnetsteuerventile V1 bis V4 können jedoch auch andere Ventiltypen verwendet werden, die elektrisch über einen Betätigungsmagneten 8 (gegebenenfalls sogar nur einen Schwarz/Weiß-Schaltmagneten) verstellbar sind. Die Magnetsteuerventile V1 bis V4 könnten auch jeweils zwei Betätigungsmagneten für je eine Stellrichtung aufweisen.

Die Pumpe P ist an einen weiteren CAN-Knoten C1 angeschlossen. An den CAN-Knoten C sind ferner ein Knickwinkelsensor 2 im Gelenk 1 und Drucksensoren 5 für die Arbeitsleitungen 3, 4 angeschlossen.

Zum Anheben der Sektion M1 in Fig. 1 aus der gezeigten Lage wird das Magnetsteuerventil V2 in eine regelnde Durchgangsstellung verstellt, während gleichzeitig das Magnetsteuerventil V4 in eine regelnde Durchgangsstellung verstellt wird. Zum Absenken der Sektion M1 aus der in Fig. 1 gezeigten Lage wird das Magnetsteuerventil V1 aus der gezeigten Absperrstellung in eine regelnde Durchgangsstellung verstellt, während gleichzeitig das Magnetsteuerventil V3 aus der gezeigten Absperrstellung in eine regelnde Durchgangsstellung verstellt wird. In Fig. 1 sind alle Magnetsteuerventile V1 bis V4 in ihren Absperrstellungen, so dass der Hydromotor H hydraulisch blockiert ist.

Bei einem Notfall, d.h. einem Ausfall des CAN-Bussystems oder des CAN-Knotens C, nach Durchbrennen der Arbeitsspule des jeweiligen Betätigungsmagneten 8, bei Hängenbleiben des jeweiligen Magnetsteuerventils V1 bis V4, oder bei einem grundsätzlichen Stromausfall kann die Sektion M1 nicht mehr verstellt werden. Da die Magnetsteuerventile V1 bis V4 in exponierter Lage am Masten M oder beim Hydromotor H angeordnet sind, sind sie vom Boden und/oder der Kabine des Hebezeugs A aus nicht erreichbar.

Erfindungsgemäß ist nun (nur anhand des Magnetsteuerventils V4 dargestellt) dem Betätigungsmagneten 8 eine Notfallspule N zugeordnet, die über eine eigene Verkabelung 11 und einen Schalter 12 an eine Stromquelle 13 angeschlossen ist, und es ermöglicht, mittels des Schalters 12 (z.B. eines Tasters in der Kabine oder vom Boden zugänglich) das jeweilige Magnetsteuerventil V4 in einem Notfall zu verstellen. Zweckmäßig sind alle Magnetsteuerventile V1 bis V4, unabhängig von ihrer Bauweise, mit einer solchen Notfallspule N ausgestattet. Die Stromquelle 13 kann zur grundsätzlichen Stromversorgung des Hebezeugs A gehören, ist jedoch zweckmäßig eine vollständig eigenständige Stromquelle (Batterie), die auch im Falle eines Stromausfalls des gesamten Systems funktionsfähig bleibt. In einer einfachen Ausführungsform können alle Notfallspulen N gemeinsam an eine Verkabelung 11 angeschlossen sein. Zweckmäßiger ist jedoch für jede Notfallspule N eine eigene Verkabelung 11 vorgesehen, um die Magnetsteuerventile V1 bis V4 im Notfall individuell verstellen zu können.

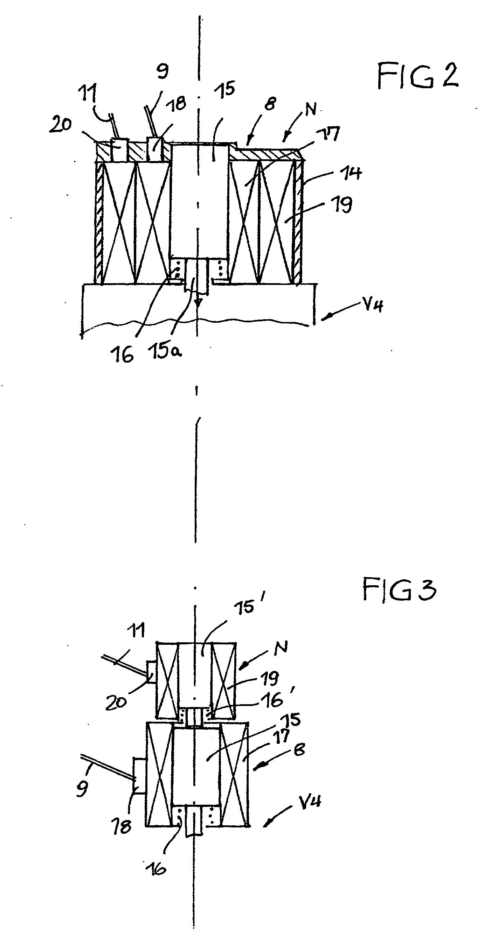

In einer einfachen, nicht gezeigten Ausführungsform wird die Notfallspule N durch eine Doppelwicklung der Arbeitsspule des Betätigungsmagneten 8 gebildet, d.h., dass die Arbeitsspule des Betätigungsmagneten 8 aus zwei Adern gewickelt ist, deren eine an die elektrische Steuerleitung 9 und deren andere an die Verkabelung 11 angeschlossen ist. Da jedoch dann die Gefahr besteht, dass bei Durchbrennen der Arbeitsspule des Betätigungsmagneten 8 auch die Notfallspule N durchbrennen könnte, ist Ausführungsformen der Vorzug zu geben, bei denen die Arbeitsspule und die Notfallspule getrennt sind, beispielsweise wie in den Fig. 2 und 3 gezeigt.

In Fig. 2 hat der Betätigungsmagnet 8 des Magnetsteuerventils V4 eine Arbeitsspule 17, die einen Anker 15 umgibt. Der Anker 15 wird durch eine Rückstellfeder 16 in der Ausgangslage gehalten und bei einer Strombeaufschlagung der Arbeitsspule 17 in Pfeilrichtung verstellt, um über einen Stößel 15a ein nicht gezeigtes Element des Magnetsteuerventils V4 zu betätigen. Zu der Arbeitsspule 17 gehört ein Anschlusskonnektor 18 für die elektrische Steuerleitung 9. Konzentrisch zur Arbeitsspule 17 ist bei der gezeigten Ausführungsform außen eine zweite Wicklung 19 vorgesehen, die die Notfallspule N bildet und über einen Anschlusskonnektor 20 mit der Verkabelung 11 verbunden ist. Die Notfallspule N wirkt hier auf denselben Anker 15 ein wie die Arbeitsspule 17.

In Fig. 3 ist an dem Betätigungsmagneten 8 koaxial zur Arbeitsspule 17 und dem Anker 15 die Notfallspule N mit der Wicklung 19 und einem Hilfsanker 15' vorgesehen, so dass sich das nicht gezeigte Element des Magnetsteuerventils V4 bei Beaufschlagen der Notfallspule N vom Hilfsanker 15' über den Anker 15 betätigen lässt. Der Hilfsanker 15' könnte mit der Notfallspule N auch zwischen dem Anker 15 und dem Glied des Magnetsteuerventils V4 angeordnet sein.

Da es zum Beheben eines Notfalls ausreicht, das jeweilige Magnetsteuerventil V1 bis V4 irgendwie zu verstellen, reicht es aus, wenn die Notfallspule mit dem Anker 15 bzw. dem Hilfsanker 15' als Schwarz/Weiß-Schaltmagnet ausgebildet ist, der bei Erregung voll durchschaltet und keine Proportionalfunktion ausführt.

### Notfall 1:

Die Arbeitsspule 17 ist durchgebrannt. Durch Schließen des Schalters 12 wird die Notfallspule N bestromt und der Anker 15 verstellt.

### Notfall 2:

Das CAN-Bussystem oder der CAN-Knoten C ist funktionsunfähig, oder die elektrische Steuerleitung unterbrochen. Durch Schließen des Schalters 12 lässt sich der Anker 15 dennoch verstellen, um das Magnetsteuerventil V4 zu betätigen.

### Notfall 3:

Die gesamte Stromversorgung ist ausgefallen, nur die Stromquelle 13 ist funktionsfähig. Durch Betätigen des Schalters 12 lässt sich der Anker 15 wie gewünscht verstellen.

### Notfall 4:

Entweder der Anker 15 und/oder das Element des Magnetsteuerventils V4 ist bzw. sind so schwergängig, dass die Kraft des Betätigungsmagneten 8 nicht mehr ausreicht, den Anker 15 zu verstellen. Durch Betätigen des Schalters 12 wird zusätzlich über die Notfallspule N eine Magnetkraft aufgebaut, die sich zur durch die Arbeitsspule 17 erzeugten Magnetkraft addiert und mit hoher Wahrscheinlichkeit den unzulässig hohen Bewegungswiderstand überwinden hilft.

Notfall 5:

Zum Einjustieren und/oder Kalibrieren verschiedener Komponenten des Hebezeugs müssen Mastsektionspositionen ohne Benutzen der Elektroniksteuerung verstellt werden. Auch hierfür lassen sich die Notfallspulen gewinnbringend einsetzen.

Bei einer weiteren, nicht gezeigten Ausführungsform werden die Betätigungsmagneten 8 und/oder die Notfallspulen N drahtlos angesteuert, beispielsweise mit Hilfe von Sender/Empfänger-Kombinationen. In diesem Fall können die Notfallspulen gegebenenfalls sogar zusätzlich über feste Verkabelungen angesteuert werden.

## Patentansprüche

1. Elektrohydraulische Steuervorrichtung (S) für wenigstens einen Hydromotor (H), insbesondere einen Hydromotor (H) an einem Masten oder Ausleger (M, M1, M2) eines Hebezeugs (A), wie eines Betonförderers oder eines Mobilkrans, mit wenigstens einem benachbart zum Hydromotor (H) angeordneten, elektrisch fernverstellbaren Steuerventil (V1 bis V4), das wenigstens einen Betätigungsmagneten (8) mit einer Arbeitsspule (17) und einem Anker (15) aufweist, **dadurch gekennzeichnet, dass** zur Notfallverstellung des Steuerventils (V1 bis V4) eine an eine von der Stromversorgung der Arbeitsspule (17) getrennte Stromquelle (13) angeschlossene Notfallspule (19) außen auf oder in Verlängerung der Arbeitsspule (17) vorgesehen ist.

2. Elektrohydraulische Steuervorrichtung nach Anspruch 1, **dadurch gekennzeichnet, dass** für die Arbeitsspule (17) und die Notfallspule (19) ein gemeinsamer Anker (15) vorgesehen ist.

3. Elektrohydraulische Steuervorrichtung nach Anspruch 1, **dadurch gekennzeichnet, dass** für die Notfallspule (19) ein Hilfsanker (15') vorgesehen ist.

4. Elektrohydraulische Steuervorrichtung nach wenigstens einem der Ansprüche 1 bis 3, **dadurch gekennzeichnet, dass** die Notfallspule (19) mit dem Anker (15) bzw. dem Hilfsanker (15') einen Schwarz/Weiß-Betätigungsmagneten bildet.

5. Elektrohydraulische Steuervorrichtung nach Anspruch 1, **dadurch gekennzeichnet, dass** die Notfallspule (19) über eine eigene Verkabelung (11) mit einem vom Boden und/oder in einer Kabine zugänglichen Schalter (12) an die Stromquelle (13) angeschlossen ist.

6. Elektrohydraulische Steuervorrichtung nach wenigstens einem der Ansprüche 1 bis 5, **dadurch gekennzeichnet, dass** die Arbeitsspule (17) an eine Elektroniksteuerung (C) angeschlossen ist, vorzugsweise an einen CAN-Knoten eines CAN-Bussystems, und dass die Verkabelung (11) zur Notfallspule (19) vom CAN-Bussystem getrennt angeordnet ist.

7. Hebezeug (A), insbesondere Betonförderer oder Mobilkran, mit einem Masten oder Ausleger (M, M', M") und wenigstens einem zusammen mit wenigstens einem elektrisch über wenigstens einen Betätigungsmagneten (8) betätigbaren Steuerventil (V1 bis V4) am Masten oder Ausleger (M, M1, M2) angeordneten Hydromotor (H), wobei zumindest der wenigstens eine Arbeitsspule (17) und einen Anker (15) aufweisende Betätigungsmagnet (8) an eine vom Boden und/oder in einer Kabine betätigbare Elektroniksteuerung (C) angeschlossen ist, **dadurch gekennzeichnet, dass** zusätzlich am Steuerventil (V1 bis V4) eine Notfallspule (19) vorgesehen ist, und dass die Notfallspule (19) eine von der Stromversorgung des Betätigungsmagneten (8) und/oder der Elektroniksteuerung (C) getrennte Stromquelle (13) aufweist und elektrisch vom Boden und/oder der Kabine ansteuerbar ist.

## Claims

1. Electrohydraulic control device (S) for at least one hydraulic motor (H), in particular a hydraulic motor (8) cn a mast or extension arm (M, M1, M2) of a lifting apparatus (A), such as a concrete delivery truck or a mobile crane, having at least one control valve (V1 to V4), which is arranged adjacent to the hydraulic motor (H), can be regulated electrically and remotely and has at least one actuating magnet (8) having a working coil (17) and an armature (18), **characterized in that**, in order to regulate the control valve (Vl to V4) in the event of an emergency, an emergency coil (19), which is connected to a current source (13) isolated from the power supply of the working coil (17), is provided on the outside on or as an extension of the working coil (17).

2. Electrohydraulic control device according to Claim 1, **characterized in that** a common armature (15) is provided for the working coil (17) and the emergency coil (19).

3. Electrohydraulic control device according to Claim 1, **characterized in that** an auxiliary armature (15') is provided for the emergency coil (19).

4. Electrohydraulic control device according to at least one of Claims 1 to 3, **characterized in that** the emergency coil (19) with the armature (15) or the auxiliary armature (15') forms a black-and-white actuating magnet.

5. Electrohydraulic control device according to Claim 1, **characterized in that** the emergency coil (19) is connected to the current source (13) via dedicated wiring (11) to a switch (12) which is accessible from the floor and/or in a cab.

6. Electrohydraulic control device according to at least one of Claims 1 to 5, **characterized in that** the working coil (17) is connected to an electronic controller (C), preferably to a CAN node of a CAN bus system, and **in that** the wiring (11) to the emergency coil (19) is arranged such that it is isolated from the CAN bus system.

7. Lifting apparatus (A), in particular a concrete delivery truck or a mobile crane, having a mast or an extension arm (M, M', M") and at least one hydraulic motor (H), which is arranged on the mast or the extension arm (M, M1, M2) together with at least one control valve (V1 to V4), which can be electrically actuated via at least one actuating magnet (8), at least the actuating magnet (8), which has at least one working coil (17) and an armature (15), being connected to an electronic controller (C), which can be actuated from the floor and/or in a cab, **characterized in that**, in addition, an emergency coil (19) is provided on the control valve (V1 to V4), and **in that** the emergency coil (19) has a current source (13), which is isolated from the power supply of the actuating magnet (8) and/or the electronic controller (C), and can be driven electrically from the floor and/or the cab.

## Revendications

1. Dispositif de commande électrohydraulique (S) pour au moins un moteur hydraulique (H), en particulier un moteur hydraulique (H) sur un mât ou une flèche (M, M1, M2) d'un équipement de levage (A), tel qu'un transporteur à béton ou une grue mobile, comprenant au moins une vanne de commande (V1 à V4) réglable à distance électriquement, disposée au voisinage du moteur hydraulique (H) et qui présente au moins un aimant d'actionnement (8) avec une bobine de travail (17) et un induit (5), **caractérisé en ce qu'**il est prévu, pour le réglage de secours de la vanne de commande (V1 à V4), une bobine de secours (19) raccordée à une source de courant (13), séparée de l'alimentation en courant de la bobine de travail (17), et disposée extérieurement sur le prolongement de la bobine de travail (17) ou dans celui-ci.

2. Dispositif de commande électrohydraulique suivant la revendication 1, **caractérisé en ce qu'**un induit commun (15) est prévu pour la bobine de travail (17) et la bobine de secours (19).

3. Dispositif de commande électrohydraulique suivant la revendication 1, **caractérisé en ce qu'**un induit auxiliaire (15') est prévu pour la bobine de secours (19).

4. Dispositif de commande électrohydraulique suivant l'une au moins des revendications 1 à 3, **caractérisé en ce que** la bobine de secours (19) forme avec l'induit (15) ou l'induit auxiliaire (15') un aimant d'actionnement tout ou rien.

5. Dispositif de commande électrohydraulique suivant la revendication 1, **caractérisé en ce que** la bobine de secours (19) est raccordée à la source de courant (13) par l'intermédiaire d'un câblage propre (11) et d'un interrupteur (12) accessible à partir du sol et/ou dans une cabine.

6. Dispositif de commande électrohydraulique suivant l'une au moins des revendications 1 à 5, **caractérisé en ce que** la bobine de travail (17) est reliée à une commande électronique (C), de préférence à un noeud CAN d'un système de bus CAN, et que le câblage (11) menant à la bobine de secours (19) est disposé séparément du système de bus CAN.

7. Equipement de levage (A), en particulier transporteur à béton ou grue mobile, comprenant un mât ou une flèche (M, M1, M2) et au moins un moteur hydraulique (H) disposé sur le mât ou la flèche (M, M1, M2) avec au moins une vanne de commande (V1 à V4) actionnable électriquement par l'intermédiaire d'au moins un aimant d'actionnement (8), au minimum l'aimant d'actionnement (8) présentant au moins une bobine de travail (17) et un induit (15) étant relié à une commande électronique (C) actionnable à partir du sol et/ou dans une cabine, **caractérisé en ce qu'**il est prévu en supplément une bobine de secours (19) sur la vanne de commande (V1 à V4) et que la bobine de secours (19) présente une source de courant (13), séparée de l'alimentation en courant de l'aimant d'actionnement (8) et/ou de la commande électronique (C), et peut être commandée électriquement à partir du sol et/ou de la cabine.
